# EUROPEAN PATENT APPLICATION

(11) **EP 1 920 904 A1**
(43) Date of publication of application: **14.05.2008**
(21) Application number: 07120431.7
(22) Date of filing: 12.11.2007
(51) Int. Cl.: B29C 65/00, B29C 65/06, F23J 13/04

(54) **Assembly of a combustion plant and a duct system for supplying air and/or discharging flue gases**

(30) Priority: 10.11.2006 NL 2000312
(71) Applicant: Muelink & Grol Groep B.V., 9723 BP Groningen (NL)
(72) Inventor: Bruining, Hendrik, 9471 BS Zuidlaren (NL); Pestoor, Ietse Jan, 9891 AA Ezinge (NL); Saathof, Johan Gerrit, 9611 DH Sappemeer (NL)
(74) Representative: van Westenbrugge, Andries

(57) **Abstract**

The invention relates to an assembly comprising a combustion plant for heating water, and a duct system for supplying air to and/or discharging flue gases from the combustion plant. The duct system comprises a first duct part and a second duct part. A first section of the first duct part is connected to a second section of the second duct part by a spin weld. The first section and second section are made of thermoplastic plastic.

## Description

The invention in a general sense relates to a combustion plant, in particular a heating plant for heating water, and also a duct system for supplying air (for oxygen provision) to and discharging flue gases from the combustion plant. Combustion plants for heating water are commonly used in buildings for heating those buildings and/or for providing those buildings with hot tap water. Such combustion plants are usually gas-fired or oil-fired.

Duct systems for such assemblies are known and are generally made up of a number of interconnected duct parts, such as straight pipes, bend parts, spacers for mutual positioning of concentrically running pipes, inlet and/or outlet mouths through which air is taken in and/or discharged respectively, cowls to prevent wind or rain from coming in etc. All these duct parts have to be connected to each other, an operation which is performed partly on site and partly at the factory during production of the duct parts. In practice, this connection process has been performed for many years now by means of snap-in connections. In particular, when the duct parts concerned are for the passage of flue gases, it is additionally very important for the connection to be accurate and reliable so as to ensure that leakage of flue gases does not occur. The seal in this case is made by means of sealing rings between the connected duct parts.

The advantage of snap-in connections is that they can be made easily and quickly during assembly or fitting by combining two duct parts. A major disadvantage is, however, that for a good snap-in connection the dimensional characteristics and measurement tolerances of the duct parts have to meet high standards.

If the snap-in connection or possibly another type of connection is not completely accurate, leakage will very soon occur at the seals, and the risk of the snap-in connection accidentally coming apart will increase. This clearly requires a very accurate production process. However, what is perhaps even more important, it also requires a great amount of time and fine tuning in the preceding design phase in order to be able to achieve a duct system that functions well. With each change in the design, in order to be able to test the product, the connection in particular and often the seals as well have to be dimensioned again. In testing during the design phase it is not uncommon to find that the connection between duct parts is not sound, so that it has to be adapted and then retested. Furthermore, in practice the process of translation from prototype to mass-producible production model takes a great amount of time. Here again, great care has to be taken with the connection. It will be clear that all this affects the cost of such a duct system and also the entire assembly of which the duct system forms part. Moreover, it results in considerable delays for making corrections on such duct systems and also on the entire assembly of which the duct system forms part.

The object of the present invention is therefore to provide an improved assembly of combustion plant and duct system according to the preamble of Claim 1.

The abovementioned object is achieved according to the invention by providing an assembly comprising:
- a combustion plant for heating water; and
- a duct system for supplying air and/or discharging flue gases from the combustion plant;
in which the duct system comprises a first duct part and a second duct part;
in which a first section of the first duct part is connected by a fixing means to a second section of the second duct part;
in which the first section and second section are made of plastic;
which assembly according to the invention is characterized in that the plastic is a thermoplastic plastic, and in that the fixing means comprises at least a first spin weld.

The technique of spin welding as such has been known for a very long time (see, for example, "REIBSCHWEISSEN THERMOPLASTISCHER KUNSTOFFE" (friction welding of thermoplastic plastics), an article dating from 1972 published in Kunstoffe, Munich, DE, vol. 62, No. 8, 1972, pp. 478 - 482, written by Dr.-Ing. Rolf Schaefer. This spin welding technique is a special form of friction welding. The surfaces of two parts to be connected are pressed against each other, the surfaces to be connected are rotated relative to each other and alongside each other (one of the parts is generally fixed), and at the position of the surfaces the material plasticizes, so that a molten pool is produced. After a certain time the mutual rotation is slowed down and ended. During the solidification of the molten pool the surfaces to be connected fuse and the connection is produced. Such a spin weld is distinguishable in the finished product. The spin weld produces a perceptible change in structure of the material at the position of the surfaces to be connected. The abovementioned article "REIBSCHWEISSEN THERMOPLASTISCHER KUNSTSTOFFE" also refers to connecting pipes by spin welding.

The use of a spin weld in an assembly according to the invention for the connection of duct parts has a number of advantages. It produces a very reliable connection. The assembly technique is simple, just like a well-designed snap-in connection. Furthermore, it is found that the dimensional characteristics and tolerances are much less critical, or are even relatively low down on the critical scale, compared with the conventional connecting techniques used for connecting duct parts in the case of such assemblies. This last advantage bears fruit already in the design phase. Different designs are easily made with a good connection and tested. The step from definitive prototype to production model can proceed much more quickly. The only requirement for making the connection is that the two parts to be connected have surfaces which can be placed against each other and can rotate relative to each other and alongside each other. This can be, for example, the axial head end face of the one duct part and the axial head end face of the other duct part or the radial face on a flange on the other duct part.

It will be clear that in order to make the connection the material at the position of the connection, i.e. in the first section or second section, is important, and that the first and second duct parts therefore do not have to be made fully of that material, but that it is preferable for the first and second duct parts to be made substantially of the material at the position of the first and second duct parts respectively.

It is advantageous according to the invention here, either if the second section comprises a circular groove which opens in the axial direction of the duct system and the first section comprises a cylindrical body which is accommodated in said groove, or if the first section comprises a circular groove which opens in the axial direction of the duct system and the second section comprises a cylindrical body which is accommodated in said groove. The advantage of this is that the groove provides a simple positioning for the body which determines the position of the spin weld, without this immediately requiring great measurement accuracy or low tolerances in order to produce a good spin weld.

It is furthermore advantageous here if the cylindrical body, viewed in the radial direction, is connected on both sides to the opposite side walls of the groove by said at least one first spin weld. In this way a first spin weld is present on both sides of the body, which is advantageous for the strength and reliability of the connection. This spin weld can, if desired, be discontinuous in the direction of rotation. However, it is advantageous if the cylindrical body, viewed in the radial direction, is connected on both sides to the opposite side walls of the groove by said at least one first spin weld. In this way the first spin weld immediately provides a double seal (on each side of the body), which obviates the need for additional seals, such as conventional seals, between the first and second duct parts.

A reliable and strong connection can also be obtained, or in addition to the above said connection can be improved, if the axial end of the body accommodated in the groove is connected to the bottom of the groove by said at least one first spin weld. The advantage of such a spin weld is furthermore that the necessary pressure for developing frictional heat during the rotation can be achieved in a simple manner by pressing down the first duct part and second duct part in the axial direction.

It is particularly advantageous according to the invention if the first duct part forms part of a flue gas discharge duct for the discharge of flue gases from the combustion plant. This is because it is very important in particular in the case of a flue gas duct for the connection to be sound and reliable, since the risk of flue gases leaking needs to be prevented as far as possible. Such leakage can lead to health risks, and can also result in less efficient functioning of the combustion plant. The latter is important in particular if a third duct part with a diameter that is greater than that of the first duct part is provided around and parallel to the first duct part, and the space between the first and third duct parts forms part of an air supply duct for supplying air to the combustion plant. According to the invention (see Claim 8 of the original application), the duct parts forming part of the air supply duct can also be connected here to each other or to another duct part by means of a spin weld. This at least one second spin weld can be produced simultaneously with the at least one first spin weld. Just as in the case of the connection between the first and second duct parts, it is possible here (see Claims 9 - 12 of the original application) to provide the third section with an axial groove and the fourth section with an axial body (or, vice versa, to provide the third section with an axial body and the fourth section with an axial groove).

According to the invention, the first duct part, the second duct part, the third duct part and the fourth duct part can be various divergent parts of the duct system. Essentially, any pair of parts of a duct system to be connected in an assembly according to the invention can be connected by a spin weld. Examples include: straight pipes, bend parts, spacers for mutual positioning of concentrically running pipes, inlet and/or outlet mouths through which air is taken in and/or flue gas is discharged respectively, cowls to prevent wind or rain from coming in etc. For example, a combined inlet/outlet mouthpiece makes it possible to connect, on the one hand, the outside pipe (as the third duct part) - which generally bounds the air inlet duct on the outside - and, on the other hand, the inside pipe (as the first duct part) - which generally bounds the flue gas duct and bounds the inside of the air inlet duct - simultaneously by spin welding to the common combined inlet/outlet mouthpiece (as the second duct part). A number of embodiments of this are elaborated on in Claims 13 - 19 of the original application.

According to one of these embodiments (especially original claims 14 and 15), the second duct part is a combined inlet/outlet mouthpiece connected to a combination of mutually concentric inlet pipe (third duct part) and outlet pipe (first duct part) elements. In which at least the connection of the outlet pipe element and the inlet/outlet mouthpiece are connected by a spin weld and in case of a plastic inlet pipe element preferably also the inlet pipe element and the inlet/outlet mouthpiece are connected by spin welding. One can already assemble the mouthpiece and adjacent inlet/outlet pipe elements in the factory as those can be mounted onto the building from the outside of the building. The spin weld technique provides a permanently gas tight connection between the mouthpiece and the outlet pipe element, which excludes any leakage via the mouthpiece from the outlet pipe element to the inlet pipe element.

According to a further embodiment of the invention, it is advantageous if said at least one first and/or second spin weld is of an uninterrupted closed annular shape. In this way the first and/or second spin weld also provides a seal between the connected duct parts, thus obviating the need for additional sealing means such as rings or tape.

According to yet a further embodiment of the invention, it is advantageous if:
the thermoplastic plastic of the first section is a PE or PP; and/or
the thermoplastic plastic of the second section is a PE or PP; and/or
the thermoplastic plastic of the third section is a PE or PP; and/or
the thermoplastic plastic of the fourth section is a PE or PP.
PE (polyethylene) and PP (polypropylene) are thermoplastic plastics which are very suitable for spin welding. The interconnected surfaces can be made of a different plastic if desired.

According to a second aspect, the invention relates to a duct system suitable for, and in particular intended for, an assembly according to the invention. In other words, according to this second aspect, the invention therefore relates to a duct system comprising a first duct part and a second duct part; in which a first section of the first duct part is connected by a fixing means to a second section of the second duct part; and in which the first section and second section are made of plastic, characterized in that the plastic is a thermoplastic plastic, and in that the fixing means comprises at least a first spin weld. Subclaims 2-21 also form further embodiments in the thus described duct system according to the second aspect of the invention.

The present invention will be explained in greater detail below with reference to an exemplary embodiment shown in the drawing, in which:
Figure 1 shows a diagrammatic view of an assembly according to the invention, partly in section, partly in elevational view;
Figure 2 shows the detail II of Figure 1 on an enlarged scale; and
Figure 3 shows very diagrammatically in a disassembled state the area of a spin-welded connection as detail III of Figure 2, on an enlarged scale.

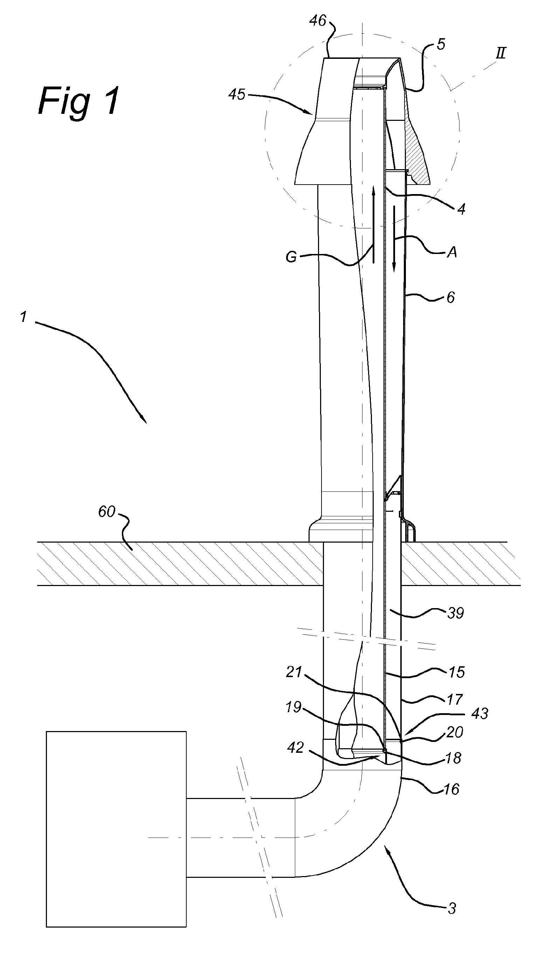

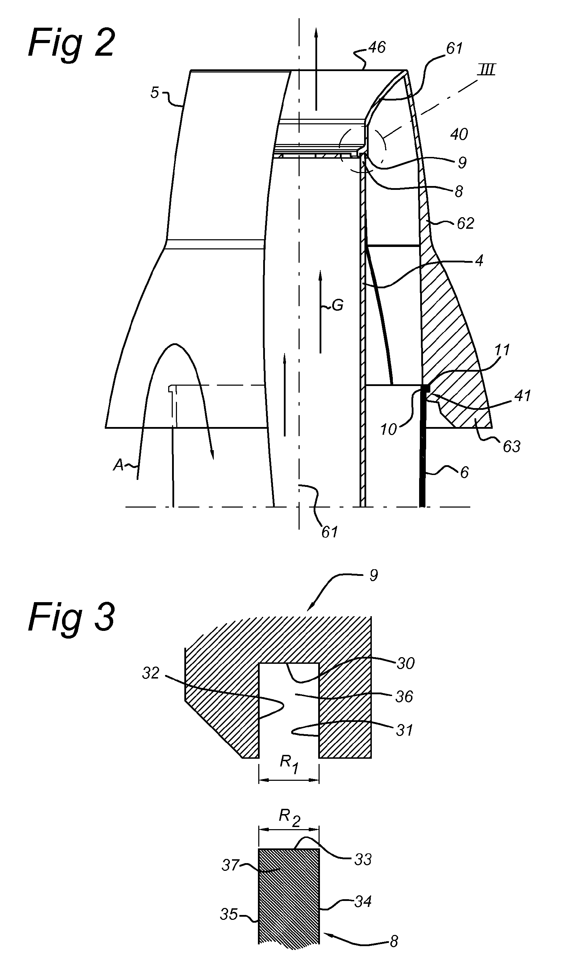

Figure 1 shows an assembly 1 according to the invention. This assembly comprises, on the one hand, a combustion plant 2 and, on the other hand, a duct system 3 for supplying air (arrows A) to the combustion plant 2 and discharging flue gases (arrows G) from the combustion plant 2. Reference numeral 60 indicates diagrammatically the roof of a building in which the combustion plant 2 is set up and out of which the duct system 3 projects to the open air in order to take in air through the combined inlet/outlet mouthpiece 45 (see arrow A in Figure 2) and to expel flue gases (see arrows G in Figure 2). If desired, a cowl can also be provided above the outlet mouth 46, which cowl in particular prevents rain from coming in.

The duct system 3 is a combined inlet/outlet system, in which, in this case at any rate, the outlet duct 4, 14 for flue gases runs virtually fully inside the inlet duct 6, 16 for air in such a way that the passage 39 for air is bounded by the inlet pipe 6, 16 and the outlet duct 4, 14. The outlet duct projects from the inlet duct only at the inlet/outlet mouthpiece 45. It is pointed out, however, that it is also a common occurrence, in particular inside the building, for the outlet duct and inlet duct to run partially or largely side by side and outside each other, while outside the building the outlet duct runs internally through the inlet duct.

The duct system according to Figure 1 is made up of various duct parts:
- duct part 4 - which numeral is used in the claims to indicate the first duct part - which forms part of the outlet duct;
- duct part 5 - which numeral is used in the claims to indicate the second duct part - which forms the inlet/outlet mouthpiece 45;
- duct part 6 - which numeral is used in the claims to indicate the third duct part - which forms part of the inlet duct;
- duct part 14 - which numeral is used in the claims to indicate the first duct part - which forms part of the outlet duct;
- duct part 15 - which numeral is used in the claims to indicate the second duct part - which forms part of the outlet duct;
- duct part 16 - which numeral is used in the claims to indicate the third duct part - which forms part of the inlet duct;
- duct part 17 - which numeral is used in the claims to indicate the fourth duct part - which forms part of the inlet duct;
- and also further duct parts not indicated in any further detail by a numeral.

It is pointed out that the terms, first, second, third and fourth duct part in the claims are used only to make it possible to distinguish between various duct parts. It will be clear to the reader that within the scope of Claim 1 the duct parts 6 and 16 can be regarded as first duct parts and the duct parts 5 and 15 can be referred to as second duct parts. As is clear from the characterizing part of the original Claim 1, the essence of the invention is how various duct parts are connected to each other, namely by a spin weld.

Referring to Figures 2 and 3 in particular, the first duct part 4 is connected by a first section 8 by means of a spin weld 40 to the second section 9 of the second duct part 5, the inlet/outlet cowl. For the sake of clarity, these parts 8 and 9 are shown in Figure 3 in a disassembled state, i.e. before the spin weld has been made.

As Figure 3 shows, the first section 8 comprises a cylindrical body 37, and the second section 9 comprises a circular groove 36 which opens in the axial direction. The cylindrical body 37 has two opposite sides 34, 35 and an axial free end 33. The groove 36 has two opposite side walls 31 and 33 and a bottom 30. The radial thickness R2 of the cylindrical body 37 is substantially the same as the axial width R1 of the groove 36.

By pressing the thermoplastic duct part 4 with its cylindrical body 37 in the axial direction into the groove 36 of the thermoplastic duct part 5/the mouthpiece 45, and keeping it pressed while the duct parts 4 and 5 are rotated at sufficient speed relative to each other about the axis 61, heat will be developed by friction between:
- the groove bottom 30 and the axial end 33 of the body 37 if they are pressed against each other; and
- the opposite sides 34 and 35 of the body and the side walls 31 and 32 of the groove if they are resting against each other.

As a result of this frictional heat, a sort of molten pool of the thermoplastic plastic from both duct parts 4, 5 is produced. After ending of this rotation, the molten pool will solidify, and the two duct parts will be joined together at that point by a fusion weld, called a spin weld 40. Although the two duct parts can be rotated individually for the purpose of the mutual rotation, for practical reasons it will generally be preferable to clamp the one duct part, for example duct part 5, so that it is immovable, and to clamp the other duct part, for example duct part 4, on a rotary element so that it can be set in rotation.

The spin weld 40 obtained in this way can extend in an annular manner along three sides of the body - the opposite sides 34, 35 and the axial end face 33. The spin weld 40 will in this way form a gas-tight connection along which no leak can occur.

Although a number of producers, including the applicant, generally make duct part 6 of metal, duct part 6 can in fact also easily be made of thermoplastic plastic. In that case the third section 10 of duct part 6 and the fourth section 11 of duct part 5/mouthpiece 45 can be connected to each other by a spin weld 41.

The fourth section 11 is in the form of a radial partition 63, which serves to reinforce the outside wall 62 of the mouthpiece 45 in such a way that air can flow in through the inlet duct 39 between this partition and an adjacent partition (see arrow A in Figure 2). Generally, three, four, six or eight of these partitions 63 will be provided, uniformly distributed around the circumference. The result of these partitions is that the spin weld 41 possibly to be produced here will not extend uninterruptedly in the circumferential direction/direction of rotation. This spin weld 41 will consist of a number of discrete weld zones, which number will correspond to the number of partitions. The advantage of spin weld 41 is that said spin weld can be produced in one go simultaneously with spin weld 40. However, if desired, spin weld 41 can also be produced after spin weld 40, in a separate operation.

Spin weld 41 as such resembles spin weld 40. The difference is mainly that spin weld 41 is discontinuous in the circumferential direction, while spin weld 40 is continuous in the circumferential direction, and that in the case of spin weld 41 the body and the groove extend in the radial direction, while in the case of spin weld 40 they extend in the axial direction. It will, however, be clear that in the case of spin weld 40 also the body and the groove can extend in the radial direction or in a slanting direction.

Referring to Figure 1, it is pointed out that according to the invention other duct parts can also be connected to each other by means of a spin weld. Figure 1 shows diagrammatically that two concentric straight pipe parts can be connected by spin welds 42 and 43 to two concentric bend parts. Straight inner pipe 15 has an end part 19 which is connected by means of a spin weld 42 to the end part 18 of an inner pipe bend 14. Straight outer pipe 17 has an end part 21 which is connected by means of a spin weld 43 to the end part 20 of an outer pipe bend 16. The spin welds 42 and/or 43 can be made in the same way as spin weld 40 here, but it is also conceivable to produce it/them in a different way. In particular, spin weld 42, and preferably also spin weld 43, will be gas-tight here.

It should be pointed out that in practice the duct parts of a duct system will generally not all be connected by spin welding, at any rate not at the factory. This is because it will result in long, unmanageable duct systems and because it is not always known beforehand exactly how long the duct system has to be and what shape it has to have. If suitable equipment is available on site, it is, however, possible to provide spin welding in situ. From a practical point of view, particularly in the case of the inlet/outlet mouthpieces, bend parts and shorter duct segments, it will be very advantageous to connect these to each other already during production in the factory by spin welding.

## Claims

1. Assembly (1) comprising:
• a combustion plant (2) for heating water; and
• a duct system (3) for supplying air to and/or discharging flue gases from the combustion plant (2);
in which the duct system (3) comprises a first duct part (4, 14) and a second duct part (5, 15);
in which a first section (8, 18) of the first duct part (4, 14) is connected by a fixing means to a second section (9, 19) of the second duct part (5, 15); and
in which the first section (8, 18) and second section (9, 19) are made of plastic;
**characterized in that** the plastic is a thermoplastic plastic, and **in that** the fixing means comprises at least a first spin weld (40, 42).

2. Assembly (1) according to one of the preceding claims, in which
either the second section (9) comprises a circular groove (36) which opens in the axial direction of the duct system (3) and the first section (8) comprises a cylindrical body (37) which is accommodated in said groove (36),
or the first section (18) comprises a circular groove which opens in the axial direction of the duct system (3) and the second section (19) comprises a cylindrical body which is accommodated in said groove.

3. Assembly (1) according to Claim 2, in which the cylindrical body (37), viewed in the radial direction, is connected on both sides (34, 35) to the opposite side walls (31, 33) of the groove (36) by said at least one first spin weld (40).

4. Assembly (1) according to Claim 3, in which the radial thickness (R2) of the cylindrical body (37) and the radial width (R1) of the groove (36) are substantially the same.

5. Assembly (1) according to one of Claims 2 - 4, in which the axial end (33) of the body (37) accommodated in the groove (36) is connected to the bottom (30) of the groove (36) by said at least one first spin weld (40).

6. Assembly (1) according to one of the preceding claims, in which the first duct part (4, 14) forms part of a flue gas discharge duct for discharging flue gases from the combustion plant (2).

7. Assembly (1) according to Claim 6, in which a third duct part (6, 16) with a diameter that is greater than that of the first duct part (4, 14) is provided around and parallel to the first duct part (4, 14), and in which the space between the first and third duct parts (6, 16) forms part of an air supply duct (39) for supplying air to the combustion plant (2).

8. Assembly (1) according to Claim 7, in which a third section (10, 20) of the third duct part (6, 16) is fixed by at least one second spin weld (41, 43) to a fourth section (11, 12) of the second duct part (5) or of a fourth duct part (17); and in which the third section (10, 20) and fourth section (11, 21) are made of thermoplastic plastic.

9. Assembly (1) according to one of the preceding Claims 8, in which
either the third section comprises a circular groove which opens in the axial direction of the duct system (3) and the fourth section comprises a cylindrical body which is accommodated in said groove,
or the fourth section (20) comprises a circular groove which opens in the axial direction of the duct system (3) and the third section (21) comprises a cylindrical body which is accommodated in said groove.

10. Assembly (1) according to Claim 9, in which the cylindrical body, viewed in the radial direction, is connected on both sides to the opposite side walls of the groove by said at least one second spin weld (43).

11. Assembly (1) according to Claim 10, in which the radial thickness of the cylindrical body and the radial width of the groove are substantially the same.

12. Assembly (1) according to one of Claims 9 - 11, in which the axial end of the body accommodated in the groove is connected to the bottom of the groove by said at least one second spin weld (43).

13. Assembly (1) according to one of Claims 7 - 12, in which the second duct part (5, 15) is an element provided with one or more spacers for positioning the first duct part (4, 14) in the third duct part (6, 16).

14. Assembly according to Claim 7, in which the first duct part (4) and third duct part (6) are each an elongated pipe; in which the second duct part is an inlet/outlet mouthpiece (45), in which the inlet/outlet mouthpiece (45) has an inner wall (61) and an outer wall (62) which merge at the outlet mouth (46) of the inlet/outlet mouthpiece (45), the outlet mouth (46) facing away from the combustion plant; in which the second section (9) is provided on the end of the inner wall (61) facing away from the outlet mouth, in which the outer wall (62) is provided on the inside with a plurality of radial partitions (63), in particular three, four, six or eight partitions; and in which said partitions (63) engage upon the end (10) of the third duct part (6) facing away from the combustion plant (2).

15. Assembly according to Claim 14, in which the radial partitions (63) are fixed to the end (10) of the third duct part (6) facing away from the combustion plant by means of a discrete weld zone (41) per partition (63) obtained by spin welding.

16. Assembly (1) according to one of Claims 1 - 12, in which the first duct part (4, 14) is an elongated pipe, and in which the second duct part (5, 15) is an end mouthpiece (45).

17. Assembly (1) according to Claim 16, in which the third duct part (6, 16) is an elongated pipe, and in which the fourth section forms part of the second duct part (5, 15).

18. Assembly (1) according to one of Claims 1 - 12, in which the first and second duct parts (5, 15) are both an elongated pipe.

19. Assembly (1) according to Claim 18, in which the third and fourth duct parts are both an elongated pipe.

20. Assembly (1) according to one of the preceding claims, in which said at least one first spin weld (40, 42) and/or second spin weld (41, 43) is/are of an uninterrupted closed annular shape.

21. Assembly (1) according to one of the preceding claims, in which the thermoplastic plastic of the first section is a PE or PP; and/or
in which the thermoplastic plastic of the second section is a PE or PP; and/or
in which the thermoplastic plastic of the third section is a PE or PP; and/or
in which the thermoplastic plastic of the fourth section is a PE or PP.

22. Duct system suitable for, and in particular intended for, an assembly according to one of the preceding claims.
